**Europäisches Patentamt**

**European Patent Office**

**Office européen des brevets**

(19)

(11) Veröffentlichungsnummer: **0 306 885**

**A1**

(12) # EUROPÄISCHE PATENTANMELDUNG

(21) Anmeldenummer: **88114467.9**

(22) Anmeldetag: **05.09.88**

(51) Int. Cl.⁴: **G01K 1/14 , G01K 1/10**

(30) Priorität: **07.09.87 DE 3729927**

(43) Veröffentlichungstag der Anmeldung:
**15.03.89 Patentblatt 89/11**

(84) Benannte Vertragsstaaten:
**DE FR GB**

(71) Anmelder: **Siemens Aktiengesellschaft Berlin und München**
**Wittelsbacherplatz 2**
**D-8000 München 2(DE)**

(72) Erfinder: **Nusser, Alban, Ing. grad.**
**Michael-Wening-Strasse 4**
**D-8050 Freising(DE)**

(54) **Temperaturfühler für extreme Umweltbedingungen.**

(57) Temperatursensor, insbesondere für den Einsatz in nichtmechanischen Druck- oder Kopiergeräten mit einem elektrischen Fühlelement (10), das innerhalb eines abgeschlossenen, Füllmaterial enthaltenden Schutzrohres (12) angeordnet ist, durch dessen Ende die Zuleitungen (11) zum elektrischen Fühlelement (10) abgedichtet geführt sind. Das elektrische Fühlelement (10) ist im Schutzrohr wärmeleitend eingebettet und die Zuleitungen (11) sind im Bereich des Schutzrohres (12) von Isolierschläuchen (18) aus porösem, dampfdurchlässigem Material umhüllt. Das Ende des Schutzrohres ist mit feuchtigkeitsbindendem Trockenmittelgranulat gefüllt.

EP 0 306 885 A1

Xerox Copy Centre

## Temperaturfühler für extreme Umweltbedingungen

Die Erfindung betrifft einen Temperatursensor gemäß dem Oberbegriff des Patentanspruches 1.

Temperatursensoren der eingangs genannten Art sind für verschiedene Einsatzbereiche in der Technik bekannt. Temperatursensoren werden z. B. in Kaltfixiereinrichtungen von elektrografischen bzw. elektrofotografischen Druck- oder Kopiergeräten, wie sie z. B. in der DE-PS 28 38 864 beschrieben sind, verwendet. Bei derartigen Geräten wird das elektrostatisch auf den Aufzeichnungsträger aufgebrachte Tonerbild in einem Lösungsmitteldampfbad angelöst und dadurch auf dem Aufzeichnungsträger fixiert. Zur Regelung der den Wärmehaushalt steuernden Elemente der Kaltfixiereinrichtung werden schnell ansprechende und robuste Temperatursensoren benötigt, die sowohl in korrosiver Umgebung als auch der stetig wiederkehrenden Taupunkts-und Gefrierpunktsunterschreitung bei konstant bleibenden Fühlerwerten langzeitig widerstehen können.

Um derartige Temperatursensoren vor aggressiven Medien zu schützen, ist es üblich, den eigentlichen Temperaturfühler innerhalb eines dicht verschlossenen Röhrchens aus resistentem Material, mehr oder weniger gut wärmeleitend, aber elektrisch isoliert unterzubringen. Die elektrischen Zuleitungen sind durch das Schutzrohr nach hinten herausgeführt, wobei das Schutzrohr meistens zusätzlich noch mit Füllmaterialien, wie z. B. Epoxidharz, ausgegossen ist, um den eigentlichen elektrischen Temperatursensor hermetisch einzubetten. Es ist außerdem üblich, das Schutzrohr als langes dünnes Rohr auszugestalten, das im Bereich des Meßpunktes das elektrische Fühlelement umfaßt und innerhalb des aggressiven Mediums durch die Behälterwand bis in die umgebende Luftatmosphäre herausgeführt ist.

Die Erfahrung hat nun gezeigt, daß in Temperatursensoren der üblichen Art bei den genannten Einsatzbedingungen die Isolierung, insbesondere der Zuleitungen zum elektrischen Fühlelement von der Luftfeuchtigkeit hinterwandert wird. Dies führt allmählich zur Zerstörung des Temperatursensors.

Derartig aufgebaute Temperatursensoren mit langem schlanken Schutzrohr sind außerdem wegen der spröden Füllung ziemlich steif und können durch unbeabsichtigtes Verbiegen des Schutzrohres leicht beschädigt werden.

Handelsübliche Temperatursensoren sind meist für den Einsatz in flüssigen oder gasförmigen Medien gebaut. Zum Anklemmen an eine Fläche eines zu regelnden Gegenstandes sind sie mit ihrer bis zur Spitze reichenden runden Bauform wenig geeignet. Dazu würde ein zusätzlicher Adapter benötigt, der wiederum die Ansprechzeit des Fühltemperatursensors wegen verschlechterter Thermodynamik erhöht. Die von der Spitze des Schutzrohres aufgenommene Wärme wird dabei zu schnell am eigentlichen elektrischen Fühlelement vorbei abgeleitet.

Aufgabe der Erfindung ist es, einen Temperatursensor der eingangs genannten Art insbesondere zum Einsatz in Kaltfixiereinrichtungen von Druckoder Kopiergeräten bereitzustellen, der schnell anspricht, robust aufgebaut ist und der sowohl in korrosiver Umgebung als auch z. B. der stetig wiederkehrenden Taupunkts- und Gefrierpunktsunterschreitung bei konstant bleibenden Fühlerwerten langzeitig widerstehen kann.

Diese Aufgabe wird bei einem Temperatursensor der eingangs genannten Art gemäß dem kennzeichnenden Teil des ersten Patentanspruches gelöst.

Vorteilhafte Ausführungsformen der Erfindung sind in den Unteransprüchen gekennzeichnet.

Dadurch, daß die Zuleitungen für das im Schutzrohr wärmeleitend eingebettete elektrische Fühlelement im Bereich des Schutzrohres von Isolierschläuchen aus porösem, dampfdurchlässigem Material umhüllt sind und außerdem ein Teilbereich des Schutzrohres feuchtigkeitsbindendes Material enthält, wird verhindert, daß innerhalb des Schutzrohres freie Luftfeuchtigkeit vorhanden ist. Diese würde bei Unterschreiten des Taupunktes als Wasser ausfallen und dieses bei Unterschreitung des Gefrierpunktes gefrieren. Bei Erwärmung des Temperaturfühlers über dem Taupunkt könnte dieses Wasser nicht schnell genug verdunsten. Dabei ergäbe sich gegenüber der Umgebungsatmosphäre ein Dampfdruckgradient in Richtung Innenraum des Schutzrohres, was ein Nachfließen der Luftfeuchtigkeit ins Innere des Schutzrohres zur Folge hätte, z. B. auch über Leckstellen des Leitungsverschlusses oder über Diffusionsvorgänge. Auf diese Weise würde sich zwar langsam aber stetig Wasser im Innern des Schutzrohrs ansammeln und den Temperatursensor zerstören.

Durch die erfindungsgemäßen Maßnahmen hingegen kann die innerhalb der Isolierschläuche befindliche Luftfeuchtigkeit entweichen, die dann von dem im Schutzrohr enthaltenen feuchtigkeitsbindenden Material, z. B. Trockenmittelgranulat oder Trockenmittelperlen aufgenommen wird.

Die lockere Füllung gewährleistet außerdem die Biegsamkeit des Schutzrohres ohne Bruchgefahr der Zuleitungen.

Um den Temperatursensor leicht befestigen zu können, ist das Schutzrohr an seinem vorderen Ende über eine definierte Länge zusammengequetscht und bildet dadurch eine Aufnahmelasche für eine Befestigungsschraube. Die Schraubenbohrung ist hermetisch und resistent verschlossen, z. B. mittels Lötung oder Verschweißung. Die von der Befestigungsschraube erzeugte hohe Anpreßkraft zwischen Schutzrohr und Auflagefläche bewirkt einen guten Wärmeübergang. Die kurze Entfernung von der Schraubenbefestigung über das Schutzrohr zum eigentlichen elektrischen Fühlelement gewährleistet eine kurze Ansprechzeit des Temperatursensors.

Bei einer weiteren vorteilhaften Ausführungsform der Erfindung ist unmittelbar hinter dem elektrischen Fühlelement das Schutzrohr zusammengequetscht und bildet so eine flächige Anlage an der Meßfläche. Damit wird ein guter Wärmeübergang gewährleistet. Dies bewirkt, daß bei einer Temperaturänderung an der Meßfläche, die an der Schraubbefestigung übertragene Wärmeleistung mindestens zum größten Teil zur Aufheizung des Temperatursensors zur Verfügung steht, da die vom Schutzrohr abgezogene Wärmeleistung zum größten Teil von der die Anlagefläche des Quetschbereiches des Sensors berührenden Meßfläche herrührt. Eine derartige Anordnung gewährleistet ein äußerst rasches Ansprechen des Temperatursensors. Gleichzeitig wird durch den Quetschbereich das elektrische Fühlerelement an der Spitze des gesamten Temperatursensors fixiert.

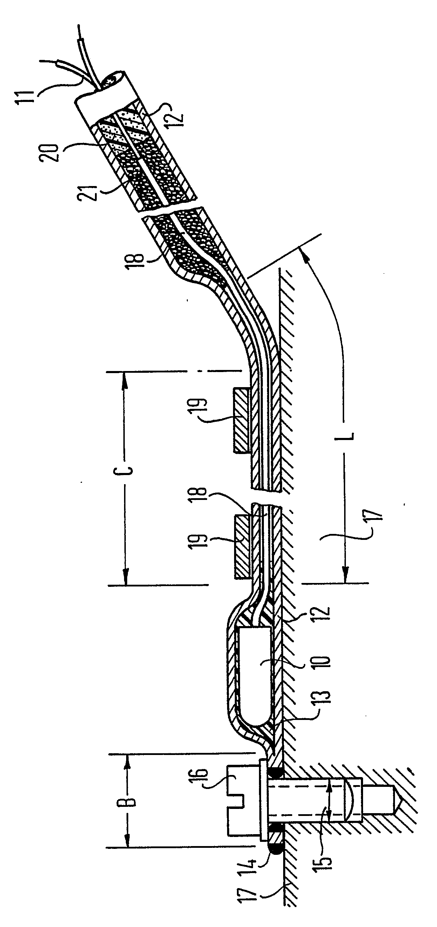

Eine Ausführungsform der Erfindung ist in der Zeichnung dargestellt und wird im folgenden beispielsweise näher beschrieben.

Die FIG zeigt eine Schnittdarstellung eines an der Behälterwand einer Kaltfixiereinrichtung befestigten Temperatursensors.

Der in der FIG dargestellte Temperatursensor enthält ein handelsübliches elektrisches Fühlelement 10 mit überlangen Anschlußdrähten 11, das in einem resistenten aber gut wärmeleitenden Schutzrohr 12 z. B. aus Edelstahl an dessen vorderer Spitze mittels einer Wärmeleitpaste bzw. Wärmeleitkleber 13 eingebettet ist. Das an sich zylindrische Schutzrohr ist am vorderen Ende 14 über eine Länge B zusammengequetscht und bildet so einen laschenförmigen Ansatz mit einer Aufnahmeöffnung 15 für eine Befestigungsschraube 16. Der zusammengequetschte Teil 14 ist hermetisch und resistent verschlossen, z. B. mittels Lötung und Verschweißung, insbesondere auch im Bereich der Aufnahmeöffnung 15. Über die Aufnahmeöffnung 15 und eine Befestigungsschraube 16 wird der laschenförmige Ansatz 14 und damit das Schutzrohr 12 auf einer Meßfläche 17, in diesem Fall an einer Behälterseitenwand befestigt. Die von der Befestigungsschraube 16 erzeugte hohe Anpreßkraft zwischen Schutzrohr 12 und der Meßfläche 12 bewirkt einen guten Wärmeübergang. Die kurze Entfernung von der Schraubbefestigung 16 über das Schutzrohr 12 und die Wärmeleitpaste 13 gewährleistet eine kurze Anit des Temperaturfühlers.

Unmittelbar am hinteren Ende des elektrischen Fühlelementes 10 ist das Schutzrohr über die Länge L zusammengequetscht, aber nur soweit, daß Anschlußleitungen 11, 18 für das elektrische Fühlelement mit ihrer elektrischen Isolierung 18 mit Spiel Platz finden. Durch das Zusammenquetschen des Schutzrohres 12 wird wiederum eine flächige Anlage an der Meßfläche 17 erreicht und dadurch ein guter Wärmeübergang gewährleistet. Das Schutzrohr wird in dem gequetschten Bereich über mindestens einen Niederhalter 19 auf einer Länge C, die in etwa dem 10-fachen Durchmesser des Schutzrohres entspricht, gegen die Meßfläche 17 gedrückt, was wiederum einen guten Wärmeübergang gewährleistet. Dies bewirkt, daß bei einer Temperaturänderung an der Meßfläche 17 die an der Schraubbefestigung 16 übertretende Wärmeleistung mindestens zum größten Teil zur Aufheizung des elektrischen Fühlelementes 10 zur Verfügung steht, weil die vom Schutzrohr 12 abgezogene Wärmeleistung zum größten Teil von der Auflagefläche der Länge C kommen kann. Diese Anordnung gewährleistet ein äußerst rasches Ansprechen des Temperatursensors. Gleichzeitig wird damit das elektrische Fühlelement 10 an der Spitze des Temperaturfühlers fixiert.

Um die Lebensdauer des Temperaturfühlers in bezug auf die extremen Umgebungsbedingungen zu verbessern, wird durch geeignete Maßnahmen verhindert, daß innerhalb des Schutzrohres 12 freie Luftfeuchtigkeit vorhanden ist. Diese würde bei Unterschreiten des Taupunktes als Wasser ausfallen und bei weiterer Temperaturabsinkung unter den Gefrierpunkt gefrieren. Bei Erwärmung des Temperatursensors über den Taupunkt könnte dieses Wasser dann nicht schnell genug verdunsten. Dabei ergäbe sich gegenüber der Umgebungstemperatur ein Dampfdruckgradient in Richtung Innenraum des Schutzrohrs 12, was ein Nachfließen der Luftfeuchtigkeit ins Innere des Schutzrohres 12 zur Folge hätte.

Diese Luftfeuchtigkeit würde dann zu einer Wasseransammlung im Inneren des Schutzrohres 12 führen und das elektrische Fühlelement zerstören.

Zu diesem Zwecke sind die Anschlußleitungen 11 des elektrischen Fühlelementes 10 mit Isolierschläuchen 18 aus porösem Material oder nicht hygroskopischem Gewebe, wie z. B. porösem Teflon "Goretex" oder "Simpatex" Membran-Folien oder Glasfasern und ähnlichem umhüllt. Damit kann die innerhalb der Isolierschläuche 18 befindliche Luftfeuchtigkeit entweichen. Die Isolierschläuche reichen nur bis zu einem Verschlußstopfen 20 am hinteren Ende des Schutzrohres 12, mit dem die blanken Anschlußleitungen 11 im Inneren des Schutzrohres 12 hermetisch vergossen sind. Für den Verschlußstopfen 20 sind möglichst wasserdampfdichte Vergußmaterialien zu wählen, wie z. B. Glaslot oder Keramik bzw. sehr wasserdampfdichte Gießharze oder Elastomere. Der restlich ungequetschte Endbereich des Schutzrohres 12 ist um die Anschlußleitungen 11 locker mit Trockenmittelgranulat 21 oder Trockenmittelperlen gefüllt und zwar mit einer Konsistenz von etwa 5/10. Dieses Trockenmittelgranulat 21 bindet die in das Innere des Schutzrohres 12 eingedrungene bzw. eindiffundierte Luftfeuchtigkeit an sich. Die lockere Füllung von etwa 5/10 gewährleistet außerdem die Biegsamkeit des Schutzrohres 12 ohne Bruchgefahr der Zuleitungen 11.

**Ansprüche**

1. Temperatursensor, insbesondere für den Einsatz in nicht mechanischen Druck- oder Kopiergeräten mit einem elektrischen Fühlerelement (10), das innerhalb eines abgeschlossenen, Füllmaterial enthaltenden Schutzrohres (12) angeordnet ist, durch dessen Ende die Zuleitungen (11) zum Fühlerelement (10) abgedichtet geführt sind, **dadurch gekennzeichnet,** daß das elektrische Fühlelement (10) im Schutzrohr (12) wärmeleitend eingebettet ist, daß die Zuleitungen (11) im Bereich des Schutzrohrs (12) von einer Isolierung (18) aus porösem, dampfdurchlässigem Material umhüllt sind und daß der die Zuleitungen (11) aufnehmende Bereich des Schutzrohres (12) mindestens teilweise mit feuchtigkeitsbindendem Material (21) gefüllt ist.

2. Temperatursensor nach Anspruch 1, **dadurch gekennzeichnet,** daß das feuchtigkeitsbindende Material (21) in der Umgebung des Austrittsbereiches der Zuleitungen aus dem Schutzrohr angeordnet ist.

3. Temperatursensor nach einem der Ansprüche 1 oder 2, **dadurch gekennzeichnet,** daß der Temperatursensor im Sensorbereich des elektrischen Fühlelementes (10) eine laschenartige Ausformung (14) als Anlagefläche und zur Aufnahme von Befestigungselementen (16) aufweist.

4. Temperatursensor nach Anspruch 3, **dadurch gekennzeichnet,** daß das Schutzrohr angrenzend an den Sensorbereich zur Erzeugung einer Auflagefläche über eine definierte Länge (C) abgeflacht ausgebildet ist.

5. Temperatursensor nach einem der Ansprüche 1 bis 4, **dadurch gekennzeichnet,** daß im Austrittsbereich der Zuleitungen (11) aus dem Schutzrohr (12) ein wasserdampfdichter, die Anschlußleitungen (11) aufnehmender Verschlußstopfen angeordnet ist.

EP 0 306 885 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 236 104  (CIPRO) <br> * Insgesamt * <br> --- | 1 | G 01 K   1/14 <br> G 01 K   1/10 |
| A | EP-A-0 073 322  (BARLIAN) <br> * Seite 4, Zeile 10 - Seite 5, Zeile 19; Seite 6, Zeile 26 - Seite 7, Zeile 1; Figur * <br> --- | 1 | |
| A | DE-B-1 133 914  (H. KOPPERS) <br> * Insgesamt * <br> --- | 1 | |
| A | PATENT ABSTRACTS OF JAPAN, Band 9, Nr. 285 (P-404)[2008], 12. November 1985; & JP-A- 60 125 534 (MATSUSHITA DENKI SANGYO K.K.) 04-07-1985 <br> * Zusammenfassung * <br> ------ | 3,4 | |
| | | | **RECHERCHIERTE SACHGEBIETE (Int. Cl.4)** <br><br> G 01 K <br> G 03 G |

Der vorliegende Recherchenbericht wurde für alle Patentansprüche erstellt

| Recherchenort | Abschlußdatum der Recherche | Prüfer |
|---|---|---|
| DEN HAAG | 13-12-1988 | RAMBOER P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument

EPO FORM 1503 03.82 (P0403)